# EUROPÄISCHE PATENTSCHRIFT

(11) **EP 4 253 050 B1**
(45) Veröffentlichungstag und Bekanntmachung des Hinweises auf die Patenterteilung: **17.06.2026**
(21) Anmeldenummer: 23187634.3
(22) Anmeldetag: 22.07.2022
(51) Int. Cl.: B22F 10/20, B33Y 80/00, H02K 15/24, H02K 15/35, B33Y 10/00

(54) **VERFAHREN ZUR HERSTELLUNG EINES STATORS UND STATOR**
METHOD FOR PRODUCING A STATOR AND STATOR
PROCÉDÉ POUR FABRIQUER UN STATOR AINSI QUE STATOR

(30) Priorität: 27.07.2021 DE 102021119414
(43) Veröffentlichungstag der Anmeldung: 04.10.2023
(62) Teilanmeldung aus: 22757235.1
(73) Patentinhaber: Additive | Drives GmbH, 01309 Dresden (DE)
(72) Erfinder: Oettel, Markus, 01157 Dresden (DE)
(74) Vertreter: Meissner Bolte Partnerschaft mbB

(56) Entgegenhaltungen:
- DE-A1- 102019 130 534
- GB-A- 2 574 409
- US-A1- 2003 222 528
- US-A1- 2006 001 327
- US-A1- 2015 076 951
- US-A1- 2016 013 692
- US-A1- 2019 229 594
- US-A1- 2019 260 250
- US-A1- 2020 099 266

## Beschreibung

Die Erfindung betrifft ein Verfahren zur Herstellung eines Stators für eine elektrische Maschine, insbesondere einen oder für einen Elektromotor oder Generator, sowie einen entsprechenden Stator.

Verfahren zur Herstellung eines Stators für eine elektrische Maschine sind grundsätzlich bekannt. Beispielsweise ist es bekannt, mittels der sogenannten Hairpin-Technologie massive Kupferdrähte (z. B. Kupferflachdrähte) in Statornuten des Blechpaketes einzubringen.

Aus GB 2574409 A ist ein Stator für eine mehrphasige elektrische Maschine mit einer durch ein additives Schichtverfahren hergestellten leitenden Wicklungsbrücke bekannt.

Hairpins können Wicklungen ersetzen, die mit klassischen Wickelverfahren wie beispielsweise dem Nadelwickeln hergestellt werden. Hairpins stellen insbesondere eine andere Form und/oder Art der Wicklungen dar. Ein Hairpin kann insbesondere durch einen Draht, beispielsweise einen Massivkupferdraht, und/oder durch Umformungen eines Drahtes erzeugt werden.

Die bekannten Verfahren zur Herstellung eines Stators werden als grundsätzlich verbesserungswürdig angesehen. Insbesondere werden die bekannten Verfahren, insbesondere aufgrund von Art, Anzahl und/oder Umfang erforderlicher Umformungen und/oder Umformwerkzeuge, als vergleichsweise aufwändig empfunden und/oder sie erfüllen die an den Stator gerichteten Anforderungen, insbesondere hinsichtlich des Bauraums, thermischer und/oder elektrischer Eigenschaften nicht in der gewünschten Art und Weise.

Allgemein stellt sich bei Statoren die Aufgabe, deren Parameter, insbesondere hinsichtlich des Bauraums, thermischer und/oder elektrischer Eigenschaften weiter zu optimieren und auch flexibel zu gestalten. Dies liegt auch darin begründet, dass Elektromotoren in breiterem Maße Verwendung finden, insbesondere dann, wenn sie die an sie gestellten Anforderungen wie Energieeffizienz, Flexibilität und/oder eine Begrenzung und/oder Reduzierung des beanspruchten Bauraums in verbessertem Maße erfüllen können.

Insbesondere ist auch eine schnelle Bereitstellung von Statoren mit geänderten Eigenschaften eine Aufgabe, die sich bei der Herstellung von Statoren zunehmend stellt oder stellen kann. Insbesondere ist es eine Aufgabe der Erfindung, Art, Anzahl und/oder Umfang erforderlicher Umformungen und/oder Umformwerkzeuge zur Herstellung eines Stators zu reduzieren.

Es ist daher Aufgabe der Erfindung, ein Verfahren zur Herstellung eines Stators für eine elektrische Maschine, insbesondere Elektromotor oder Generator, vorzuschlagen, wobei der Herstellungsaufwand möglichst gering sein soll und/oder (dennoch) eine vergleichsweise hohe Effizienz und/oder gute Verwendbarkeit des Stators bzw. einer entsprechenden elektrischen Maschine im Betrieb erreicht werden soll.

Insbesondere ist es eine Aufgabe der Erfindung, die thermische und/oder elektrische Verlustleistung im Stator zu reduzieren und/oder den erforderlichen Bauraum für den Stator zu verringern und/oder zu minimieren.

Die Aufgabe wird gelöst durch ein Verfahren nach Anspruch 1 und einen Stator nach Anspruch 15. Vorteilhafte Weiterbildungen sind in den abhängigen Ansprüchen definiert.

Insbesondere wird die wenigstens eine Aufgabe gelöst durch ein Verfahren zur Herstellung eines Stators, umfassend mindestens eine Wicklung, vorzugsweise mindestens eine Hairpin-Wicklung für eine elektrische Maschine, insbesondere für einen Elektromotor oder Generator, umfassend die Schritte:
- Einbringen, insbesondere Einstecken (oder sonstiges Einführen), von Wicklungsgrundkörpern in Statornuten und
- additives Aufbringen zumindest eines Abschnittes zumindest eines Wickelkopfes, insbesondere schichtweises Aufbringen eines Aufbaumaterials und örtlich selektives Verfestigen des Aufbaumaterials durch eine Bestrahlung mit mindestens einem auf das Aufbaumaterial auftreffenden Strahl, dadurch gekennzeichnet, dass die Wicklungsgrundkörper an ihren Enden, insbesondere unmittelbar angrenzend an einen Slotliner, gegeneinander aufgespreizt sind, oder insbesondere vor dem additiven Aufbringen, an ihren Enden, insbesondere unmittelbar angrenzend an einen Slotliner, gegeneinander aufgespreizt werden.

In einer Weiterbildung wird ein Verfahren zur Herstellung eines Stators, insbesondere für einen Elektromotor oder einen elektrischen Generator, vorgeschlagen, umfassend ergänzend zu Anspruch 1 zumindest die Schritte:
- Einbringen, insbesondere Einstecken, additives Einbringen, additives Herstellen oder sonstiges Einführen von Wicklungsgrundkörpern in Statornuten, insbesondere eines Wicklungsträgers oder Stator-Rohlings, und
- additives Aufbringen zumindest eines Abschnittes zumindest eines Wickelkopfes auf die Wicklungsgrundkörper, insbesondere additives Aufbringen genau eines oder zumindest eines Wickelkopfes oder von zwei Wickelköpfen, insbesondere innerhalb eines einzigen Arbeitsschrittes.

Bevorzugt wird der zumindest eine Abschnitt des zumindest einen Wickelkopfes, der Wickelkopf oder die Wickelköpfe derart aufgebracht, dass dadurch die mindestens eine Wicklung im Stator ausgebildet wird.

In einer Weiterbildung wird ein Verfahren zur Herstellung eines Stators, insbesondere für einen Elektromotor oder einen elektrischen Generator, vorgeschlagen, umfassend ergänzend zu Anspruch 1 zumindest die Schritte:
- Additives Herstellen von Wicklungsgrundkörpern, insbesondere innerhalb eines einzigen Arbeitsschrittes und/oder gemeinsam mit einem ersten Wickelkopf,
- Einbringen, insbesondere Einstecken oder sonstiges Einführen der Wicklungsgrundkörper in Statornuten, insbesondere eines Wicklungsträgers oder Stator-Rohlings, insbesondere innerhalb eines einzigen Arbeitsschrittes, und
- additives Aufbringen zumindest eines Abschnittes zumindest eines Wickelkopfes auf die Wicklungsgrundkörper, insbesondere additives Aufbringen zumindest eines Wickelkopfes, bevorzugt eines zweiten Wickelkopfes, insbesondere innerhalb eines einzigen Arbeitsschrittes.

Durch das erfindungsgemäße Verfahren kann insbesondere die thermische und/oder elektrische Verlustleistung im Stator reduziert werden und/oder der Bauraum für den Stator verringert und/oder minimiert werden. Zudem ist eine schnelle, flexible und effiziente Herstellung möglich.

Insbesondere kann der Wickelkopf Verbindungselemente aufweisen, die durch ein additives Verfahren hergestellt sind, insbesondere durch direktes additives Aufbringen auf die Wicklungsgrundkörper, und/oder jeweils einen ersten und einen zweiten Wicklungsgrundkörper derart verbinden, dass die Höhe und/oder der Bauraum des Wickelkopfes minimiert und/oder reduziert werden.

Vorzugsweise ist wenigstens ein Verbindungselement im Wesentlichen dreieckförmig ausgebildet und/oder erstreckt sich jeweils in einem Winkel, vorzugsweise von mehr als 120° und/oder zwischen 60° und 80° in Bezug zu einer Längsrichtung des Wicklungsgrundkörpers.

Vorzugsweise wird zumindest ein Wickelkopf vollständig durch additives Aufbringen hergestellt bzw. erzeugt.

Unter additivem Aufbringen oder Herstellen wird insbesondere die Herstellung durch einen 3D-Druck, insbesondere 3D-Kupferdruck, und/oder durch ein additives Druckverfahren und/oder ein Urformverfahren verstanden. Die Elemente und/oder Anschlüsse des Wickelkopfes werden mithin bevorzugt einstückig und unmittelbar in ihrer endgültigen Form hergestellt, insbesondere durch schichtweises Aufbringen von Aufbaumaterial und bevorzugt eine selektive Verfestigung, vorzugsweise anhand eines darauf auftreffenden Strahls, zum Beispiel eines Laserstrahls.

Unter additivem Aufbringen wird mithin bevorzugt ein schichtweises Aufbringen eines Bauteils auf ein vorhandenes, vorgefertigtes Bauteil, ohne Verwendung von Schweißverbindungen, insbesondere ohne Verwendung von Schweißverbindungen zwischen zwei oder mehr vorgefertigten Bauteilen, und/oder Umformwerkzeugen und/oder Werkzeugen im Allgemeinen verstanden. Ein schichtweises Aufbringen bedeutet insbesondere ein Erzeugen oder Herstellen eines Bauteils durch schichtweises Aufbringen auf ein vorhandenes anderes Bauteil.

Der Wickelkopf wird bevorzugt mittels eines einzigen Herstellungs-, Arbeits- oder Prozessschritts hergestellt.

Bevorzugt erfolgt das additive Aufbringen auf Grundlage von Datensätzen, die die jeweiligen Geometrien festlegen. Diese Datensätze werden bevorzugt in der Konstruktion und/oder durch ein CAD- oder CAE-Programm erzeugt. Diese Datensätze steuern dann ein 3D-Drucksystem, das additiv, insbesondere schichtweise, das Aufbaumaterial aufbringt und bevorzugt selektiv verfestigt, und so zumindest einen Abschnitt des zumindest einen Wickelkopfes und/oder des Blechpakets erzeugt.

Der Stator wird bevorzugt in einem zweistufigen Verfahren hergestellt.

Dabei wird insbesondere in der ersten Stufe der Aktivbereich des Stators mit dem Wicklungsträger und seinen Statornuten, dem ersten Wickelkopf und den sich durch die Statornuten erstreckenden Wicklungsgrundkörpern hergestellt. Es wird somit in der ersten Stufe bevorzugt das Stator-Blechpaket mit den Statornuten hergestellt und die Wicklungsgrundkörper in die Statornuten eingeführt oder auch gleichzeitig mit dem Stator-Blechpaket additiv hergestellt. Insbesondere können die Wicklungsgrundkörper zumindest teilweise innerhalb der Statornuten additiv hergestellt werden. Die Wicklungsgrundkörper bilden bevorzugt auch den ersten Wickelkopf aus.

In der zweiten Stufe wird dann der zweite, dem ersten gegenüberliegende Wickelkopf durch additives Aufbringen auf die Wicklungsgrundkörper hergestellt, wobei dabei insbesondere die Wicklungsgrundkörper miteinander verschaltet werden können.

In einer Ausführungsform erfolgen sowohl die erste und die zweite Stufe der Herstellung des Stators durch ein additives Verfahren oder umfassen ein solches Verfahren.

In einer Ausführungsform umfassen sowohl die erste und die zweite Stufe der Herstellung des Stators ein additives Verfahren, wobei in der ersten Stufe die Wicklungsgrundkörper insbesondere additiv hergestellt werden, die anschließend in Axialrichtung in den Wicklungsträger eingefügt werden. Alternativ können auch Wicklungsgrundkörper und Wicklungsträger gemeinsam in einem additiven Verfahren hergestellt werden.

Ein Gedanke der Erfindung liegt darin, die Herstellung des Wickelkopfes einerseits verfahrensmäßig von der Herstellung von entsprechenden Wicklungsgrundkörpern zu trennen und andererseits die Wickelköpfe durch additives Aufbringen (bzw. ein additives Herstellungsverfahren, beispielsweise Lasersintern oder Laserschmelzen) zu erzeugen, und dabei insbesondere die Eigenschaften des Stators insgesamt zu verbessern.

Insbesondere liegt ein Gedanke der Erfindung darin, zumindest einen Wickelkopf zumindest im Wesentlichen ohne Umformungen herzustellen, insbesondere durch direktes Aufbringen auf die Wicklungsgrundkörper. Hierdurch können unerwünschte Wanddickenveränderungen, Rückfedern, Streckdehnungen und/oder Materialfluss im Wickelkopf vermieden oder reduziert werden, die ansonsten insbesondere durch Umformung entstehen oder entstehen können. Insbesondere ist ein Biegen im, insbesondere oberen, Bereich des Wickelkopfes nicht erforderlich. Insbesondere ist auch ein Verdrillen, Verwürgen und/oder Vertwisten im, insbesondere oberen und/oder unteren, Bereich des Wickelkopfes und/oder zum Anschluss des Wickelkopfes, nicht erforderlich.

Dass ein Biegen und/oder Vertwisten im, insbesondere oberen, Bereich des Wickelkopfes nicht erforderlich ist, kann zudem Herstellungsaufwand und -dauer verringern, wobei zugleich die mit dem Biegen und/oder Vertwisten einhergehenden Nachteile in Bezug auf Toleranzen im Verlauf von Verbindungselementen und die Verschlechterung der Leitfähigkeit verringert oder vermieden werden oder werden können.

Zudem können durch additives Aufbringen Radien von Verbindungselementen im Wickelkopf minimiert oder zu Null oder nahezu Null gesetzt werden und/oder Querschnitte, Abstände und/oder Lagensprünge gezielt und präzise angepasst werden. Weiterhin werden Toleranzen bei der Herstellung verringert, insbesondere was Verlauf und Querschnitte der Verbindungselemente betrifft.

Ein weiterer Gedanke der Erfindung liegt darin, auf Schweißstellen und/oder Segmentierungen des Blechpakets zu verzichten. Dies kann insbesondere die elektrischen und magnetischen Eigenschaften des Blechpakets und damit auch der elektrischen Maschine insgesamt verbessern. Beispielsweise kann der Verzicht auf Schweißstellen im Bereich des Wickelkopfs, insbesondere zum Anschluss der Wicklungsgrundkörper, die Leitfähigkeit im Bereich des Wickelkopfes weiter verbessern.

Dabei bleiben bevorzugt die bei herkömmlicher Fertigung, insbesondere ohne additives Aufbringen, nur anhand von Segmentierungen des Blechpakets, also durch Herstellung des Blechpakets in Teilen und nachträgliches Verbinden, erzielbaren Effekte erhalten. Insbesondere kann zum Beispiel der Querschnitt der Statornuten innerhalb des Blechpaketes in Radial- und/oder Axialrichtung des Stators variieren, sodass diese zumindest zum Teil einen geringeren Querschnitt als die durch sie geführten Leiter aufweisen. Zudem können Übergangsstellen, zum Beispiel Anschlüsse, innerhalb des Blechpakets, insbesondere innerhalb der Nuten, realisiert werden, die einen größeren Querschnitt als die übrigen Leiterteile erfordern.

Insbesondere können hierdurch durch Schweißen bedingte Materialveränderungen und Kontaktprobleme verringert oder vermieden werden. Gleichzeitig bleibt aber die Flexibilität erhalten, Wicklungsgrundkörper, insbesondere hinsichtlich ihres Verlaufs und/oder ihrer Querschnitte, zu variieren und in variabler Art und Weise mit dem Wicklungskopf zu kombinieren. Insbesondere wird unter "Schweißen" das unlösbare Verbinden von jeweils vorhandenen Bauteilen, zum Beispiel von elektrischen Leitern, unter Anwendung von Wärme und/oder Druck verstanden. Im Gegensatz dazu wird unter einem additiven Aufbringen insbesondere ein schichtweises Aufbringen von Aufbaumaterial verstanden, das selektiv verfestigt wird, insbesondere anhand eines darauf auftreffenden Strahls, zum Beispiel eines Laserstrahls. Vorzugsweise werden mithin beim "Schweißen" zwei bereits vorhandene Bauteile verbunden, wohingegen beim additiven Aufbringen insbesondere ein zweites Bauteil schichtweise auf ein vorhandenes erstes Bauteil aufgebracht wird und mithin bevorzugt darauf neu erzeugt wird, insbesondere auf Grundlage einer Steuerung der Verfestigung durch einen Datensatz. Insofern soll ein "Schweißen" in diesem Sinne insbesondere nicht als ein additives Herstellungsverfahren verstanden werden.

Anwendungen der Erfindung liegen insbesondere im Bereich des Prototyping und/oder in der Serienfertigung.

Insbesondere erfolgt dabei eine Kombination aus konventioneller Fertigung (beispielsweise durch Herstellen aus Wicklungsrohlingen, die ggf., z. B. im Falle von U-Pins umgeformt werden oder auch nicht umgeformt werden, z. B. im Falle von I-Pins) und additiver Fertigung (z. B. mittels Lasersintern oder Laserschmelzen).

In einer Ausführungsform sind/werden mindestens einer oder mehrere oder alle der Wicklungsgrundkörper teilweise oder vollständig nicht durch ein additives Herstellungsverfahren hergestellt, vorzugsweise durch Umformen eines Drahtes, insbesondere Kupferdrahtes, und/oder Ziehen aus Draht, insbesondere Kupferdraht, hergestellt.

Ein Einbringen eines (jeweiligen) Wicklungsgrundkörpers kann so erfolgen, dass der Wicklungsgrundkörper bereits außerhalb der Nut zusammengefügt wird und/oder nicht erst in der Nut aufgebaut wird.

Insbesondere können die Wicklungsgrundkörper I-förmig oder U-förmig sein.

Vorzugsweise können konventionell gesteckte Stator-Rohlinge durch das Aufdrucken eines Wickelkopfes (oder beider Wickelköpfe) verschaltet werden. Insbesondere können Wicklungsrohlinge montierte, vergossene und isolierte (insb. mittels Primärisolierung) Leiter in einem Stator-Blechpaket umfassen.

Ein und derselbe Stator-Rohling kann somit durch unterschiedliche Verschaltung ein anderes Verhalten (beispielsweise hinsichtlich eines Drehmoments und/oder einer Drehzahl etc.) erhalten. Dadurch wird es ermöglicht, einen Baukasten zu entwickeln, der auf Basis eines Stator-Rohlings eine Vielzahl unterschiedlicher Elektromotoren ergeben kann (dadurch dass der gleiche Stator-Rohling mit verschiedenen aufgedruckten Wickelköpfen kombiniert wird). Diese unterschiedliche Verschaltung wird bevorzugt ausschließlich digital, in der Konstruktion, insbesondere durch Variation von Datensätzen für das additive Aufbringen, und/oder ohne Anwendung physischer Werkzeuge hergestellt. Die Datensätze werden bevorzugt unter Verwendung eines CAD-oder CAE-Programms erzeugt.

Zudem können die Wicklungsgrundkörper gezielt angepasst, kombiniert und/oder variiert werden, um so beispielsweise den Stator auf ein bestimmtes Frequenzverhalten hin zu optimieren.

In einer Ausführungsform können für niedrige Frequenzen die Querschnittsflächen auch einzelner Wicklungsgrundkörper maximiert werden. Beispielsweise kann eine Statornut in nebeneinander in Axialrichtung verlaufende Segmente aufgeteilt sein, wobei der oder jeder Wicklungsgrundkörper das jeweilige Segment zumindest im Wesentlichen vollständig ausfüllt. Bevorzugt ist, in der Ausführungsform, der Stator für Betriebsfrequenzen von einem Strom durch die Wicklungsgrundkörper von maximal 10 kHz vorgesehen.

In einer Ausführungsform kann für hohe Frequenzen der Querschnitt eines oder jedes Wicklungsgrundkörpers in zumindest zwei oder zumindest drei Teilquerschnitte aufgeteilt werden, die voneinander elektrisch isoliert sind, insbesondere um die zum Beispiel durch Skin-Effekte entstehende Stromverdrängung im Inneren des Leiters zu reduzieren und so die Wirbelstromverluste zu verringern. Bevorzugt ist, in der Ausführungsform, der Stator für Betriebsfrequenzen von einem Strom durch die Wicklungsgrundkörper von mindestens 100 kHz vorgesehen.

Insgesamt wird ein vergleichsweise einfaches Verfahren realisiert, das dennoch die besonderen Vorteile eines additiven Herstellungsschrittes (zumindest teilweise) ausnutzt.

Insbesondere ermöglicht die Erfindung folgende Verbesserungen bei der Herstellung eines Stators oder kann diese ermöglichen:
- Bauraumminimierung: Insbesondere das additive Aufbringen des zumindest einen Wickelkopfes oder beider Wickelköpfe ermöglicht ein exaktes und/oder kompaktes Aufbringen des Aufbaumaterials auf die Wicklungsgrundkörper. Verbindungselemente im Wickelkopf können hinsichtlich ihres eigenen Verlaufs und ihres Verlaufs relativ zu weiteren Verbindungselementen exakt oder exakter und mit geringen Toleranzen und/oder Abständen festgelegt werden.
- Verlustreduzierung: Elektrische und/oder thermische Verluste im Stator können bevorzugt reduziert werden, da, insbesondere zum Anschluss des Wickelkopfes, weder Schweißstellen, noch Segmentierungen des Blechpakets, noch Biege- oder Twistvorgänge erforderlich sind. Zudem können Leiterquerschnitte an erforderlichen Stellen gezielt und präzise angepasst oder erhöht werden, um dort Stromdichten zu reduzieren. Weiterhin können Leiterquerschnitte auf die im Stator vorherrschenden Frequenzen hin angepasst werden.
- Flexibilität der Verschaltung: Das additive Aufbringen des Wickelkopfes ermöglicht eine flexible Verschaltung der Wicklungsgrundkörper, insbesondere unter Verwendung von Lagensprüngen zwischen verschiedenen radialen Lagen der Statornuten. Zudem ist, ohne Verwendung von Schweißstellen oder Segmentierungen des Blechpakets, die Ausbildung von Endloswicklungen möglich, insbesondere in einer zumindest teilweise geschlossenen Statornut oder in mehreren zumindest teilweise geschlossenen Statornuten. Insbesondere ist die Statornut nicht komplett und/oder ausschließlich geschlossen, sondern zum Beispiel deren Querschnitt in radialer Richtung, insbesondere nach innen hin, verengt. Wenn aber beispielweise eine radial innenliegende Öffnung einer Statornut kleiner als der Leiterquerschnitt ist, ist ohne additive Fertigung auch kein radiales Einlegen möglich. Nur offene Nuten würden dies ermöglichen, die aber ungünstiger in Bezug auf die elektrischen Eigenschaften sind. Somit ermöglicht eine additive Fertigung auch insofern zumindest eine effizientere Fertigung unter Beibehaltung der gewünschten elektromagnetischen Eigenschaften.
- Flexible Verwendung von Wicklungsgrundkörpern: Im Stator lassen sich unterschiedliche Wicklungsgrundkörper kombinieren, um die elektrischen Eigenschaften gezielt auf die vorhandenen Parameter, zum Beispiel Betriebsfrequenzen, anzupassen. Zudem sind unterschiedliche Wicklungsgrundkörper flexibel gegeneinander austauschbar.

Ein erster Wicklungsgrundkörper und ein zweiter Wicklungsgrundkörper können über Verbindungselemente zu einer Endlosschleife und/oder Endloswicklung verbunden sein.

Wenigstens ein Wicklungsgrundkörper kann in einer zumindest teilweise geschlossenen Statornut angeordnet sein.

Die Statornut kann insbesondere zu zumindest einem Wickelkopf und/oder zu einer Innenseite hin und/oder allseitig zumindest teilweise geschlossen sein.

Insbesondere kann ein Stator einen ersten additiv aufgebrachten Wickelkopf umfassen, der auf eine erste Stirnseite eines zylinderförmigen Wicklungsträgers oder Blechpakets aufgedruckt ist. Auf der gegenüberliegenden Stirnseite befindet sich bevorzugt ein zweiter additiv aufgebrachter Wickelkopf, der bevorzugt ebenfalls auf den Wicklungsträger aufgedruckt ist.

Alternativ kann ein Stator einen einzigen additiv aufgebrachten Wickelkopf umfassen, der auf Wicklungsgrundkörper an einer ersten oder zweiten Stirnseite eines zylinderförmigen Wicklungsträgers oder Blechpakets aufgedruckt ist. Auf der gegenüberliegenden Stirnseite ist bevorzugt ein zweiter Wickelkopf durch einen Bogen, insbesondere im Wesentlichen U- förmig oder auch V-förmig, aufweisende Wicklungsgrundkörper ausgebildet. Diese Wicklungsgrundkörper erstrecken sich bevorzugt mit ihren Schenkeln durch unterschiedliche Statornuten, wobei diese an der gegenüberliegenden Stirnseite, am zweiten Wickelkopf, in die jeweiligen Bögen übergehen.

Der Wicklungsträger, der Stator-Rohling oder das Blechpaket umfasst bevorzugt mehrere Statornuten, die sich bevorzugt entlang eines Umfangs des

Wicklungsträgers oder das Blechpakets insbesondere in Axialrichtung erstrecken. Innerhalb der Statornuten können Wicklungsgrundkörper in verschiedenen radialen Lagen angeordnet sein.

Insbesondere erfolgt ein direktes additives Aufbringen von Verbindungselementen des Wickelkopfes auf die Enden der Wicklungsgrundkörper. Auf diese Weise kann der Übergangswiderstand zwischen den Enden der Wicklungsgrundkörper und den Verbindungselementen reduziert oder minimiert werden, da weder Schweißstellen noch Biegungen oder Vertwisten erforderlich sind, und dabei zugleich sowohl der Anschlussquerschnitt als auch der Anschlusswinkel flexibel festgelegt werden.

Zudem kann der Verlauf der Verbindungselemente im Wickelkopf flexibel und mit geringen Toleranzen festgelegt werden.

Insbesondere wird es möglich, den gesamten Wickelkopf innerhalb eines einzigen Arbeitsschrittes, insbesondere additiv, aufzubringen, sodass Restriktionen durch sequentielles Aufbringen oder Ausbilden der Bestandteile des Wickelkopfes vermieden werden.

Der erforderliche Bauraum kann dabei sowohl in axialer als auch in radialer Richtung verringert werden. So kann bei einem erfindungsgemäßen Wickelkopf bzw. Stator sowohl die Aufbauhöhe als auch die radiale Dicke verringert und/oder auf die konkreten Anforderungen hin angepasst werden, insbesondere durch geringere Toleranzen und Abstände zwischen den Verbindungselementen und/oder durch Anpassung von Querschnitten.

Die Erfindung ermöglicht es des Weiteren, den Anteil des Aktivbereichs des Stators im Verhältnis zu seiner Gesamthöhe oder Gesamtlänge zu erhöhen. Als Aktivbereich wird insbesondere der Raum innerhalb des Wicklungsträgers oder Blechpakets verstanden. Die Gesamtlänge eines Stators ist eine Bilanz oder Summe aus Länge oder Höhe der Wickelköpfe und Aktivlänge. Unter einer Aktivlänge wird insbesondere eine Länge des Aktivbereichs in Axialrichtung verstanden.

Der zugehörige Elektromotor oder elektrische Generator kann insbesondere ein Innenläufer sein, wobei der innenlaufende Rotor als passiver Anker ausgebildet sein kann. Alternativ kann der zugehörige Elektromotor oder elektrische Generator ein Außenläufer sein.

Bei den Wicklungsgrundkörpern kann es sich insbesondere um sogenannte Hairpins handeln. Diese können entweder durch Biegen aus Rohmaterial oder aber direkt durch ein additives Verfahren hergestellt werden, wobei sie bevorzugt zwei Schenkel aufweisen, die im Wesentlichen geradlinig und parallel zueinander verlaufen und sich im eingebauten Zustand durch den Aktivbereich des Stators erstrecken.

Die Herstellung durch ein additives Verfahren ermöglicht eine gezielte Anpassung des jeweiligen Querschnitts an die konkreten Anforderungen. Beispielsweise kann der Querschnitt innerhalb des Aktivbereichs derart ausgestaltet sein, dass er die jeweiligen Nuten oder den vorgesehenen Teil der Nuten im Wesentlichen vollständig ausfüllt. Zudem kann der Verbindungsbereich zwischen beiden Schenkeln mit einen abweichenden, zum Beispiel flachen Querschnitt ausgebildet sein.

Bevorzugt werden sämtliche Hairpins eines Stators in einem einzigen additiven Arbeitsschritt hergestellt und dann gemeinsam in den Wicklungsträger eingefügt. Anschließend kann im zweiten Arbeitsgang der zweite Wicklungskopf additiv aufgebracht werden.

Alternativ können die Hairpins zu einem Korb zusammengefasst werden, wobei die Hairpins aus einzelnen Drähten gebogen und zu dem Korb zusammengefügt sein können.

Die Wicklungsgrundkörper werden bevorzugt derart in den Wicklungsträger, den Stator-Rohling oder das Blechpaket eingefügt, dass diese an einer Stirnseite (zumindest in etwa) bündig mit diesem enden, so dass dann additiv der Wicklungskopf aufgebracht werden kann.

Die Erfindung ermöglicht zudem ein sehr kurzfristiges Anpassen der Querschnitte im Stator an veränderte Anforderungen. Insbesondere kann unter Verwendung desselben oder des gleichen, insbesondere identischen, Rohmaterials, insbesondere Rohmaterial-Typs, ein erster Stator mit ersten elektrischen Eigenschaften und/oder Querschnitten und direkt anschließend ein zweiter Stator mit zweiten elektrischen Eigenschaften und/oder Querschnitten hergestellt werden.

Als Rohmaterialien dienen insbesondere Aluminiumwerkstoffe oder Aluminiumpulver, Kupferwerkstoffe oder Kupferpulver, insbesondere reines Kupfer, reines Aluminium, Aluminiumlegierungen oder Kupferlegierungen. Bevorzugt weisen die verwendeten Kupferwerkstoffe oder Kupferpulver eine Reinheit von mehr als 99,5% auf.

Hochreines Kupfer und/oder hochreines Aluminium bieten bevorzugt eine gute elektrische und thermische Leitfähigkeit. Bevorzugt liegt die Zugfestigkeit bei mindestens 170 MPa und/oder die Streckgrenze bei mindestens 120 MPa und/oder die Reißdehnung bei mehr als 20 %.

Insbesondere für ein beidseitiges Aufbringen eines Wickelkopfes durch ein additives Herstellungsverfahren kann mindestens einer der Wicklungsgrundkörper U-förmig (bzw. als U-Pin) ausgestaltet sein. Unter einem U-förmigen Wicklungsgrundkörper ist insbesondere ein Wicklungsgrundkörper zu verstehen, dessen offene Enden zumindest im Wesentlichen auf derselben Seite angeordnet sind.

Alternativ oder zusätzlich kann mindestens einer der Wicklungsgrundkörper (ggf. mehrere oder alle Wicklungsgrundkörper) I-förmig (bzw. als I-Pin) ausgebildet sein, vorzugsweise wenn beidseitig ein Wickelkopf durch additives Aufbringen erzeugt bzw. hergestellt wird. Unter einer I-förmigen Ausbildung des entsprechenden Wicklungsgrundkörpers ist vorzugsweise ein Wicklungsgrundkörper zu verstehen, dessen (vor der Verbindung) offene Enden auf gegenüberliegenden Seiten angeordnet sind. Der Wicklungsgrundkörper muss nicht (kann aber) gerade ausgebildet sein.

Insbesondere können die Wicklungsgrundkörper zumindest einen Leitertyp, insbesondere unterschiedliche Leitertypen umfassen.

Ein erster Wicklungsgrundkörper kann aus einem ersten Leitertyp und ein zweiter Wicklungsgrundkörper aus einem zweiten, sich vom ersten Leitertyp unterscheidenden, Leitertyp ausgebildet sein.

Der erste Wicklungsgrundkörper und der zweite Wicklungsgrundkörper können in Bezug auf eine Mittelachse des Stators radial und/oder axial benachbart eingebracht werden.

Ein Wicklungsgrundkörper kann in einem ersten Abschnitt aus einem ersten Leitertyp und in einem zweiten, an den ersten Abschnitt in Axial-/Längsrichtung angrenzenden, Abschnitt aus einem zweiten, sich vom ersten Leitertyp unterscheidenden, Leitertyp ausgebildet sein.

Der erste Leitertyp kann eine erste Leitfähigkeit und der zweite Leitertyp eine zweite Leitfähigkeit aufweisen, so dass durch geeignete Variation der Leitfähigkeit ohmsche Verluste beim Betrieb der elektrischen Maschine reduziert werden.

Der erste Leitertyp kann einen ersten Querschnitt/Querschnittsprofil und der zweite Leitertyp einen zweiten Querschnitt/Querschnittsprofil aufweisen, so dass thermische und/oder elektrische Verluste beim Betrieb der elektrischen Maschine im Abschnitten mit hohem Stromfluss gezielt reduziert werden.

Der erste Leitertyp kann eine erste Zahl paralleler Stränge/Leiter und der zweite Leitertyp eine zweite Zahl paralleler Stränge/Leiter aufweisen, so dass bevorzugt Verluste beim Betrieb der elektrischen Maschine mit hohen Frequenzen in erforderlichen Abschnitten reduziert werden.

Die Verbindungselemente können zumindest abschnittsweise eine dritte Leitfähigkeit, Querschnitt/Querschnittsprofil und/oder Zahl paralleler Stränge/Leiter aufweisen, so dass bevorzugt Verluste beim Betrieb der elektrischen Maschine reduziert werden.

Ein Leitertyp kann insbesondere eine Litze sein. Alternativ oder zusätzlich kann mindestens einer der Wicklungsgrundkörper wenigstens in einem Abschnitt eine Litze umfassen, wobei der Wicklungsgrundkörper insbesondere aus einer Vielzahl, insbesondere zumindest 30, sich entlang einer Längsrichtung, insbesondere voneinander und/oder durch wenigstens eine Lackschicht isolierter und nicht speziell geschichteter, erstreckender dünner, vorzugsweise runder, Einzeldrähte oder Adern ausgebildet ist, insbesondere mit einem Durchmesser von jeweils zumindest 0,1 mm oder zumindest 0,5 mm.

Alternativ oder zusätzlich kann mindestens einer der Wicklungsgrundkörper und/oder Leitertyp wenigstens in einem Abschnitt durch ein additives Fertigungsverfahren hergestellt sein, wobei in einem Querschnitt zumindest ein zweiter Bereich eine geringere Leitfähigkeit als zumindest ein erster Bereich aufweist.

Der zweite Bereich kann wenigstens einen sich quer durch den Querschnitt und/oder längs durch den Wicklungsgrundkörper, insbesondere entlang einer Geraden und/oder Ebene, erstreckenden Spalt, Zwischen- oder Hohlraum umfassen, so dass der Wicklungsgrundkörper in zumindest zwei Teilwicklungsgrundkörper aufgespalten wird.

Der (jeweilige) zweite Bereich kann zumindest abschnittsweise durch einen (vorzugsweise gefüllten, z. B. gasgefüllten und/oder mit einem flüssigen und/oder festen Material gefüllten) Hohlraum bzw. Zwischenraum ausbilden.

Der (jeweilige) zweite Bereich kann während der additiven Herstellung durch Multimaterialverarbeitung eingebracht werden, beispielsweise derart, dass der oder die jeweilige/n erste/n Bereiche/n durch Zufuhr eines ersten Materials bereitgestellt werden und der oder die jeweilige/n zweite/n Bereiche/n durch Zufuhr eines davon abweichenden Materials, beispielsweise mit geringerer Leitfähigkeit.

Vorzugsweise ist (sind) der mindestens eine zweite Bereich (ggf. mehrere oder alle zweiten Bereiche) elektrisch isolierend ausgebildet, weiter vorzugsweise zumindest abschnittsweise durch ein elektrisch isolierendes Material ausgebildet und/oder zumindest abschnittsweise durch einen (z. B. gas- bzw. luftgefüllten) Hohlraum ausgebildet. Ein Hohlraum kann sich durch Entfernen von noch pulverförmigen Aufbaumaterial ergeben. Dazu und/oder aus anderen Gründen können Öffnungen vorgesehen werden, da Endbereiche (sonst) ggf. vollständig verschlossen (insbesondere versintert) sind.

Der (jeweilige) zweite Bereich kann sich durch Nichtbelichtung oder eine abweichende Belichtung ergeben. Er kann von einer Schichtebene zur nächsten Schichtebene so verlaufen, dass mindestens ein bestimmter Flächenanteil überlappend ist, damit ein durchgängiger Hohlraum (Spalt) erzeugt wird. Mindestens ein zweiter (ggf. mehrere oder alle zweiten) Bereich(e) kann (können) sich über mindestens 0,5 cm der Länge des Leiters (bzw. der Wicklung) erstrecken, ggf. über mindestens 1,0 cm oder mindestens 2,0 cm.

Die Teilwicklungsgrundkörper können nur durch den Wickelkopf elektrisch miteinander verbunden sein.

Die zu vergleichenden Leitfähigkeiten der ersten Bereiche und des mindestens einen zweiten Bereiches sollen vorzugsweise bei einer Temperatur von 20 °C bestimmt werden. Die Leitfähigkeit mindestens eines zweiten Bereichs (ggf. mehrerer oder aller zweiten Bereiche) ist vorzugsweise maximal 0,5-mal, weiter vorzugsweise maximal 0,1-mal, noch weiter vorzugsweise maximal 0,001-mal oder maximal 0,001-mal so groß wie die elektrische Leitfähigkeit mindestens eines (ggf. mehrerer oder aller) ersten Bereiche. Die elektrische Leitfähigkeit mindestens (ggf. mehrerer oder aller) ersten Bereiche beträgt vorzugsweise mindestens 0,1 x 10⁶ S/m, weiter vorzugsweise mindestens 1,0 x 10⁶ S/m, weiter vorzugsweise mindestens 20 x 10⁶ S/m und/oder höchstens 200 x 10⁶ S/m oder höchstens 100 x 10⁶ S/m. Die Leitfähigkeit mindestens eines zweiten Bereichs (ggf. mehrerer oder aller zweiten Bereiche) kann höchstens 1 x 10⁶ S/m, ggf. höchstens 0,1 x 10⁶ S/m, weiter alternativ höchstens 1,0 x 10³ S/m, weiter alternativ höchstens 1,0 S/m, weiter alternativ höchstens 1,0 x 10⁻³ S/m, noch weiter alternativ höchstens 1,0 x 10⁻⁶ S/m, noch weiter alternativ höchstens 1,0 x 10⁻⁹ S/m und/oder mindestens 1,0 x 10⁻²⁰ S/m, alternativ mindestens 1,0 x 10⁻¹⁵ S/m betragen.

Ein Leitertyp kann insbesondere Massivkupfer, ein Hohlleiter und/oder ein Hairpin sein. Alternativ oder zusätzlich kann mindestens einer der Wicklungsgrundkörper wenigstens in einem Abschnitt aus Massivkupfer, Hairpin und/oder als Hohlleiter ausgebildet sein, wobei der Wicklungsgrundkörper insbesondere aus einer einzelnen sich entlang einer Längsrichtung erstreckenden Kupferader ausgebildet sein kann, insbesondere mit einem (kreis-)runden und/oder flachen und/oder rechteckigen Querschnitt und/oder als Flachdraht und/oder einem Außendurchmesser von minimal 1,0 mm und/oder mit einem Innendurchmesser von minimal 0,5 mm.

Ein Leitertyp kann insbesondere ein Roebelstab sein. Alternativ oder zusätzlich kann mindestens einer der Wicklungsgrundkörper wenigstens in einem Abschnitt einen Roebelstab umfassen, wobei der Wicklungsgrundkörper insbesondere aus einer Vielzahl, insbesondere zumindest 10, sich entlang einer Längsrichtung, vorzugsweise helixartig, erstreckender dünner, insbesondere voneinander isolierter und speziell geschichteter, Einzeldrähte oder Adern ausgebildet ist, insbesondere mit einem Durchmesser von minimal 0,4 mm.

In Ausführungsformen kann nur ein Wickelkopf (insbesondere bei U-förmigen Wicklungsgrundkörpern) durch additives Aufbringen (Herstellen) realisiert werden. Alternativ können auch beide Wickelköpfe zumindest abschnittsweise durch additives Aufbringen, insbesondere durch schichtweises Aufbringen eines Aufbaumaterials und additives Verfestigen des Aufbaumaterials durch eine Bestrahlung mit mindestens einem auf das Aufbaumaterial auftreffenden Strahl hergestellt werden, insbesondere bei I-förmigen Wicklungsgrundkörpern.

Die Wicklungsgrundkörper werden gegeneinander an ihren Enden (insbesondere unmittelbar angrenzend an einen Slotliner bzw. Isolierpapier (oder: Nutisolation), der/das in der Statornut angeordnet ist) aufgespreizt.

Ein Aufspreizen kann dadurch realisiert werden, dass die Wicklungsgrundkörper bereits in einer Form hergestellt werden, so dass sie nach ihrer Anordnung in der entsprechenden Nut (gegeneinander) aufgespreizt bzw. voneinander weggespreizt sind. Alternativ oder zusätzlich können die Wicklungsgrundkörper an ihren Enden (insbesondere unmittelbar angrenzend an den Slotliner) aufgespreizt werden (in einem separaten Schritt, nach Anordnen/Einstecken in die Statornut, insbesondere vor dem additiven Aufbringen des entsprechenden Wicklungskopfes). Durch ein derartiges Aufspreizen (bzw. Wegspreizen der Leiterenden voneinander) kann das additive Herstellen der Wicklungsköpfe vereinfacht werden. Beispielsweise können angrenzende Leiterabschnitte (Kupferleiterabschnitte) vor dem Energieeintrag beim additiven Herstellungsverfahren geschützt werden. Weiterhin kann ein gewisser Toleranzausgleich bei Schwankungen in einer Fügezone gewährleistet werden. Außerdem können optionale Nachbearbeitungsschritte durch eine verbesserte Zugänglichkeit erleichtert werden (beispielsweise bei einer Oberflächenbearbeitung und/oder einer Isolierung).

Vorzugsweise beginnt die Aufspreizung möglichst unmittelbar angrenzend an einen Slotliner (bzw. an ein Ende des jeweiligen Slotliners), insbesondere um möglichst wenig Wickelkopfhöhe zu verlieren. Die Aufspreizung kann direkt beim Herstellungsverfahren (beispielsweise bei einem additiven Herstellungsverfahren der Wicklungsgrundkörper) oder durch ein mechanisches Umformen (entweder vor oder nach dem Einbringen in die Statornut) erzeugt werden. Unter einem Slotliner kann insbesondere ein Isolierpapier oder eine Nutisolation verstanden werden. Der Slotliner ist insbesondere dafür vorgesehen, das Blechpaket elektrisch gegenüber den Wicklungsgrundkörpern zu isolieren.

In einer Ausführungsform sind die Wicklungsgrundkörper an wenigstens einem ihrer Enden gegen- oder zueinander aufgespreizt. Vorzugsweise weisen die gegen- oder zueinander aufgespreizten Wicklungsgrundkörper an ihren Enden einen Abstand von mindestens 0,5 mm, vorzugsweise mindestens 1,0 mm zueinander auf.

In einer Ausführungsform weist der Wicklungsgrundkörper-Abschnitt, in dem die Wicklungsgrundkörper gegen- oder zueinander aufgespreizt sind, in Axialrichtung eine Höhe von mindestens 5 mm, vorzugsweise von mindestens 10 mm auf.

In einer Ausführungsform weist ein Wicklungsgrundkörper-Abschnitt, in dem die Wicklungsgrundkörper gegen- oder zueinander nicht aufgespreizt sind, in Axialrichtung einen Überstand von mindestens 5 mm, vorzugsweise von mindestens 10 mm, gegenüber dem Stator-Rohling oder Blechpaket auf.

In einer Ausführungsform weisen die Wicklungsgrundkörper in Axialrichtung einen Überstand von mindestens 10 mm, vorzugsweise von mindestens 20 mm, zum Stator-Rohling oder Blechpaket auf.

Im Allgemeinen können die Wicklungsgrundkörper durch Ziehen und/oder Umformen von, ggf. gezogenen, Rohlingen und/oder ein additives Herstellungsverfahren erzeugt werden. Es sind auch Kombinationen denkbar, bei denen die Wicklungsgrundkörper teilweise durch Umformen eines Rohlings und teilweise durch ein additives Herstellungsverfahren erzeugt werden. Es ist auch denkbar, dass mindestens ein Wicklungsgrundkörper durch (konventionelles) Umformen und mindestens ein Wicklungskörper durch ein additives Herstellungsverfahren erzeugt wird.

Vorzugsweise weist die Wicklung (insbesondere im Bereich des Wickelkopfes) einen sich verändernden Querschnitt auf. Beispielsweise kann sich der

Querschnitt (zumindest abschnittsweise) vergrößern und/oder (zumindest abschnittsweise) verkleinern und/oder (zumindest abschnittsweise) seine Form ändern. Besonders bevorzugt bleibt eine Querschnittsfläche konstant, wobei sich die Form des Querschnittes ändert. Alternativ kann eine Querschnittsform konstant bleiben, wobei sich die Querschnittsfläche ändert. Weiter alternativ können sich sowohl Querschnittsfläche als auch Querschnittsform ändern. Insbesondere kann dadurch Raum zwischen den einzelnen Leiterabschnitten gewonnen werden, so dass beispielsweise weniger Umformarbeit nötig ist. Die Abmessungen des Leiters (bzw. der Wicklung insgesamt) können dadurch vorteilhaft eingestellt werden.

Das additive Aufbringen erlaubt dabei auch einen Verlauf von Verbindern entlang von jeweils einer Lage mit zwischenliegendem Lagensprung.

In einer Ausführungsform können mehrere zumindest im Wesentlichen identische Stator-Rohlinge hergestellt werden, die mit verschiedenen Wicklungsköpfen versehen werden. Dadurch können auf vergleichsweise einfache Art und Weise verschiedene Stator-Strukturen bzw. Stator-Typen hergestellt werden, die vorzugsweise für bestimmte Anwendungen optimiert sind.

Enden der Wicklungsgrundkörper können vor dem additiven Aufbringen nivelliert werden (bzw. auf eine gemeinsame Ebene gebracht werden), insbesondere durch Fräsen, und/oder gereinigt werden. Dadurch kann auf besonders einfache Art und Weise ein nachfolgendes additives Aufbringen der Wickelkopf-Strukturen erfolgen.

Eine Position und/oder Ausdehnung bzw. Form von Enden der Wicklungsgrundkörper kann ggf. vor dem additiven Aufbringen durch eine, z. B. optische, Messeinrichtung, bestimmt werden. Dadurch wird auf einfache Art und Weise ein präzises additives Herstellungsverfahren ermöglicht.

Die oben genannte Aufgabe wird weiterhin insbesondere gelöst durch einen Stator, umfassend eine Wicklung, vorzugsweise eine Hairpin-Wicklung, für eine elektrische Maschine, insbesondere einen Elektromotor oder Generator, hergestellt nach dem obigen Verfahren, wobei Wicklungsgrundkörper in Statornuten eingebracht, insbesondere eingesteckt sind, wobei zumindest ein Abschnitt zumindest eines Wickelkopfes additiv aufgebracht ist, insbesondere durch schichtweises Aufbringen eines Aufbaumaterials und örtlich selektives Verfestigen des Aufbaumaterials durch eine Bestrahlung mit mindestens einem auf das Aufbaumaterial auftreffenden Strahl, wobei die Wicklungsgrundkörper an ihren Enden, insbesondere unmittelbar angrenzend an einen Slotliner, gegeneinander aufgespreizt sind.

In einer Weiterbildung wird eine elektrische Maschine, insbesondere Elektromotor oder Generator, vorgeschlagen, umfassend den obigen Stator.

In einer Weiterbildung wird ein Stator, insbesondere für einen Elektromotor oder
für einen elektrischen Generator, vorgeschlagen, wobei der Stator ergänzend zu Anspruch 15 umfasst
- einen Wicklungsträger mit Statornuten zum Einbringen und/oder Tragen von Wicklungsgrundkörpern und/oder Wicklungen,
- in die Statornuten eingebrachte, insbesondere eingesteckte (oder anderweitig eingeführte) Wicklungsgrundkörper und
- zumindest einen Wickelkopf mit zumindest einem additiv aufbrachten Abschnitt, insbesondere zumindest einen additiv aufbrachten Wickelkopf oder zwei additiv aufbrachte Wickelköpfe.

Bevorzugt ist/sind der zumindest eine Abschnitt des zumindest einen Wickelkopfes, der Wickelkopf oder die Wickelköpfe derart aufgebracht, dass dadurch die mindestens eine Wicklung im Stator ausgebildet wird.

Nachfolgend wird die Erfindung anhand von Ausführungsbeispielen beschrieben, die anhand der Abbildungen näher erläutert werden. Hierbei zeigen:
- Fig. 1: eine schematische Ansicht einer Ausführungsform eines Stators (teilweise in Explosionsansicht);
- Fig. 2: eine schematische Darstellung einer weiteren Ausführungsform eines Stators (teilweise in Explosionsdarstellung);
- Fig. 3: einen Ausschnitt eines Stator-Rohlinges (ohne Wickelkopf);
- Fig. 4: eine weitere Ausschnittsdarstellung eines Stator-Rohlings (ohne Wickelkopf);
- Fig. 5: eine schematische Darstellung von Wicklungsgrundkörpern;
- Fig. 6: eine schematische Schrägdarstellung eines Stators mit Wickelkopf;
- Fig. 7: eine schematische Darstellung eines Leiters gemäß einer Ausführungsform in einer ersten Seitenansicht;
- Fig. 8: der Leiter gemäß Fig. 7 in einer zweiten Seitenansicht;
- Fig. 9: eine schematische Ansicht einer Einzelspule (teilweise in Explosionsansicht);
- Fig. 10: die Einzelspule gemäß Fig. 9.

In der nachfolgenden Beschreibung werden für gleiche und gleich wirkende Teile dieselben Bezugsziffern verwendet.

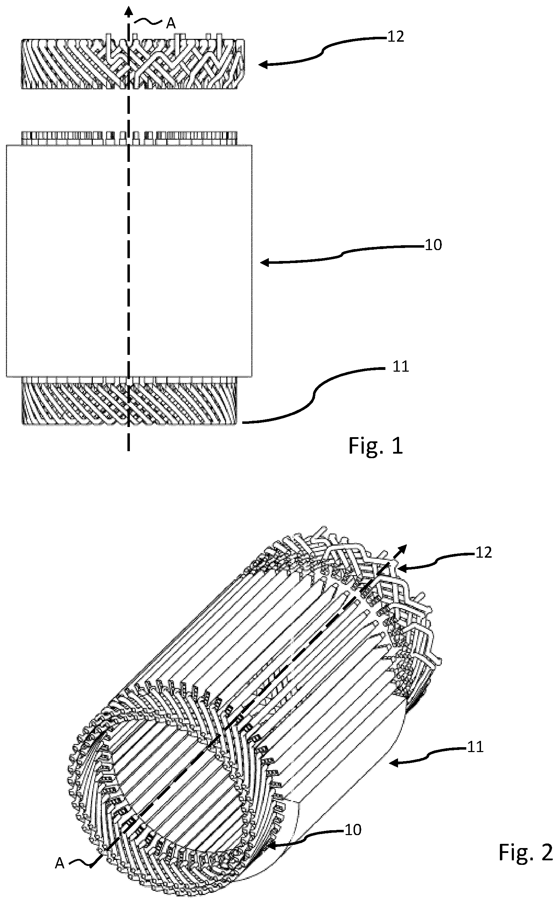

Fig. 1 zeigt eine schematische Darstellung eines Stators gemäß einer Ausführungsform. Dieser weist einen (ggf. konventionell gefertigten) Stator-Rohling 10 mit einem ersten Wickelkopf 11 auf. Der Stator-Rohling 10 selbst weist keinen zweiten Wickelkopf auf. Der zweite Wickelkopf 12 wird dann erst (wie in Fig. 1 angedeutet) durch ein additives Herstellungsverfahren (insbesondere Lasersintern) aufgedruckt.

Eine grundsätzlich ähnliche Lösung ist in Fig. 2 gezeigt. Im Unterschied zu Fig. 1 ist hier jedoch sowohl der erste Wickelkopf 11 als auch der zweite Wickelkopf 12 (beidseitig) auf den Stator-Rohling 10 aufgedruckt.

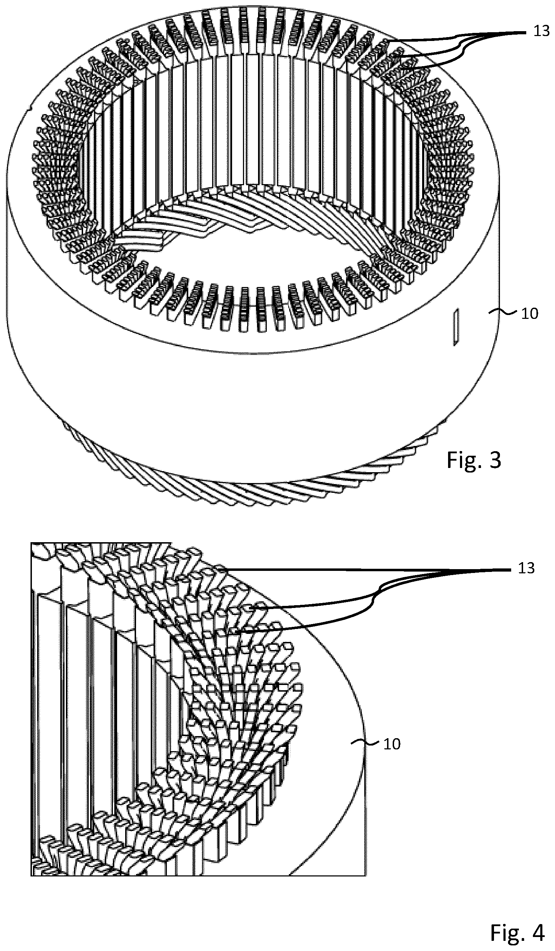

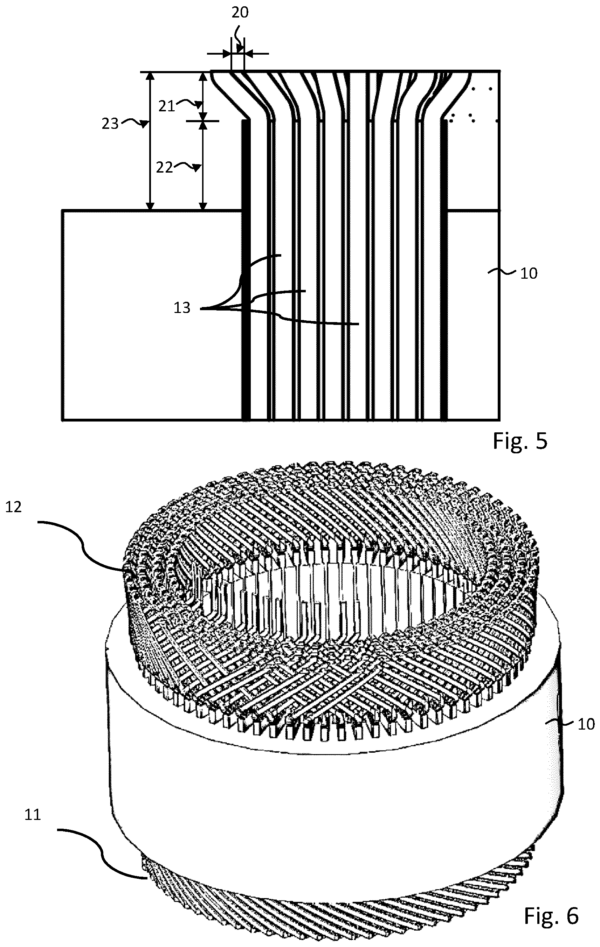

In Fig. 3 ist ein Ausschnitt eines Stator-Rohlinges 10 erkennbar mit (in diesem Herstellungsstadium) offenen Enden von Wicklungsgrundkörpern 13 (siehe auch Fig. 5). Diese sind bzw. werden (vor dem Schritt des additiven Aufbringen des Wickelkopfes bzw. der Wickelköpfe) aufgespreizt, wie insbesondere in Fig. 4 und 5 erkennbar. In Fig. 6 ist dann der Stator-Rohling mit aufgedrucktem Wickelkopf (bzw. Wickelköpfen) zu sehen.

In Ausführungsformen beginnt die Aufspreizung unmittelbar angrenzend (oberhalb bzw. unterhalb) eines Slotliners (nicht in den Figuren erkennbar) bzw. Isolierpapiers. Die Spreizung kann beispielsweise direkt durch ein additives Herstellungsverfahren (3D-Druck) oder ein mechanische Umformen erzeugt werden.

In einer Ausführungsform weisen die gegen- oder zueinander an ihren Enden aufgespreizten Wicklungsgrundkörper 13 an ihren Enden einen Abstand 20 von mindestens 0,5 mm, vorzugsweise mindestens 1,0 mm zueinander auf.

In einer Ausführungsform weist der Wicklungsgrundkörper-Abschnitt, in dem die Wicklungsgrundkörper 13 gegen- oder zueinander aufgespreizt sind, in Axialrichtung eine Höhe 21 von mindestens 5 mm, vorzugsweise von mindestens 10 mm auf.

In einer Ausführungsform weist ein Wicklungsgrundkörper-Abschnitt, in dem die Wicklungsgrundkörper 13 gegen- oder zueinander nicht aufgespreizt sind, in Axialrichtung einen Überstand 22 von mindestens 5 mm, vorzugsweise von mindestens 10 mm, gegenüber dem Stator-Rohling oder Blechpaket 10 auf.

In einer Ausführungsform weisen die Wicklungsgrundkörper 13 in Axialrichtung einen Überstand 23 von mindestens 10 mm, vorzugsweise von mindestens 20 mm, zum Stator-Rohling oder Blechpaket auf.

Der Stator-Rohling 10 bzw. die (offenen) Enden der Wicklungsgrundkörper 13 werden vorzugsweise (ggf. nach dem Imprägnieren) gefräst, um eine möglichst ebene Oberfläche für das Aufdrucken des jeweiligen Wicklungskopfes zu realisieren. Daran kann sich eine Reinigung anschließen, um zu verhindern, dass Einschlüsse in einer Fügezone erzeugt werden. Danach kann ein Einmessen auf einer bzw. in einer AM-Anlage bzw. AM-Maschine erfolgen (AM für: additive manufacturing).

Die Wicklungsgrundkörper 13 und/oder die Wickelköpfe umfassen dabei Leiter, insbesondere Kupferleiter. Die Leiter können insbesondere additiv hergestellt sein.

Insbesondere um Raum zwischen den einzelnen Leitern zu gewinnen und damit weniger Umformarbeit zu erfordern, können die Leitermessungen (vorteilhaft) beeinflusst werden.

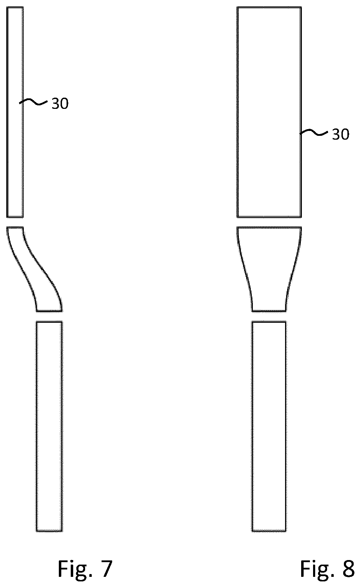

Ein konventioneller Draht weist aufgrund des Herstellungsverfahrens einen konstanten Querschnitt auf. Durch das additive Herstellungsverfahren können Außenmaße des Kupferleiters verändert werden (bzw. der Querschnitt verändert werden). Dabei kann eine Querschnittsfläche konstant bleiben, sich vergrößern oder verkleinern. Ein Beispiel, bei dem die Querschnittsfläche konstant bleibt (was aber nicht zwingend ist), sich aber die Querschnittsform und -lage ändert ist in den Fig. 7 und 8 dargestellt. Beispielsweise (siehe Fig. 7) kann sich ein Querschnitt des Leiters 30 (in der Zeichenebene von unten nach oben) von einer ersten Seite aus betrachtet verringern (innerhalb einer Transformationszone). Gleichzeitig (oder alternativ) kann der Leiter 30 auch Biegungen und/oder Abwinklungen oder Knicke aufweisen. Weiterhin kann sich derselbe Leiter 30 aus einer zweiten (um 90° rotierten Seitenansicht) in eine Richtung (in der Zeichenebene von unten nach oben) erweitern, so dass insgesamt die Querschnittsfläche konstant bleibt. Alternativ kann sich ggf. auch die Querschnittsfläche ändern..

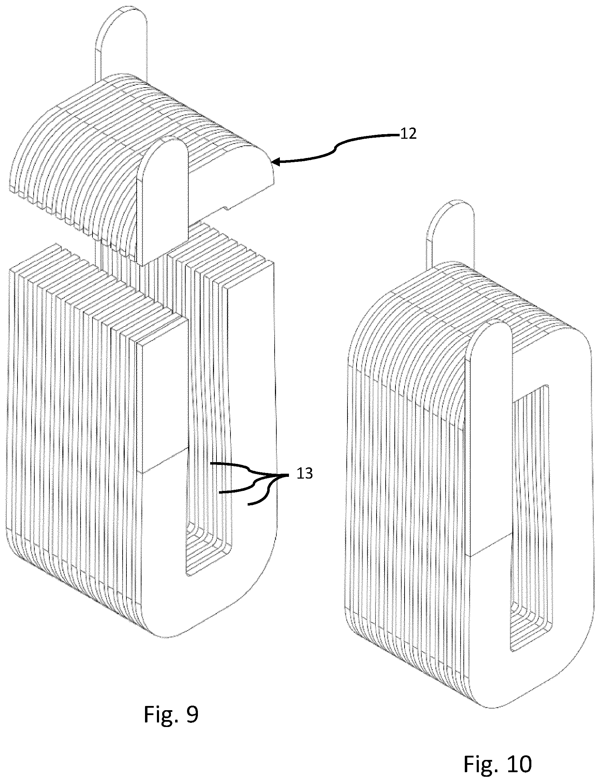

Fig. 9 und 10 zeigen eine Einzelspule (in Fig. 9 teilweise in Explosionsdarstellung), die wie folgt hergestellt werden kann. Zunächst wird eine Vielzahl von Wicklungsgrundkörpern 13 hergestellt oder bereitgestellt. Die Wicklungsgrundkörper 13 sind hier vorzugsweise als (insbesondere U-förmige) Bleche ausgebildet. Eine Verbindung (Verschaltung) der Wicklungsgrundkörper 13 im Bereich eines zweiten Wickelkopfes 12 erfolgt vorzugsweise durch ein additives Herstellungsverfahren (insbesondere Lasersintern). Konkret können (z. B. geschnittene) Bleche montiert werden und eine Verschaltung nachfolgend aufgedruckt werden.

### Bezugszeichen

- 10: Stator-Rohling
- 11: erster Wickelkopf
- 12: zweiter Wickelkopf
- 13: Wicklungsgrundkörper
- 20: Abstand
- 21 - 23: Höhen
- 30: Leiter
- A: Axialrichtung

## Patentansprüche

1. Verfahren zur Herstellung eines Stators, umfassend eine Wicklung, vorzugsweise eine Hairpin-Wicklung, für eine elektrische Maschine, insbesondere einen Elektromotor oder Generator, umfassend die Schritte:
- Einbringen, insbesondere Einstecken, von Wicklungsgrundkörpern (13) in Statornuten und
- additives Aufbringen zumindest eines Abschnittes zumindest eines Wickelkopfes (11, 12), insbesondere durch schichtweises Aufbringen eines Aufbaumaterials und örtlich selektives Verfestigen des Aufbaumaterials durch eine Bestrahlung mit mindestens einem auf das Aufbaumaterial auftreffenden Strahl, **gekennzeichnet dadurch, dass**
- die Wicklungsgrundkörper (13) an Ihren Enden, insbesondere unmittelbar angrenzend an einen Slotliner, gegeneinander aufgespreizt sind oder, insbesondere vor dem additiven Aufbringen, an Ihren Enden, insbesondere unmittelbar angrenzend an einen Slotliner, gegeneinander aufgespreizt werden.

2. Verfahren nach Anspruch 1, wobei die gegeneinander aufgespreizten Wicklungsgrundkörper an ihren Enden einen Abstand von mindestens 0,5 mm, vorzugsweise mindestens 1,0 mm zueinander aufweisen.

3. Verfahren nach einem der vorhergehenden Ansprüche, wobei ein Wicklungsgrundkörper-Abschnitt, in dem die Wicklungsgrundkörper gegeneinander aufgespreizt sind, in Axialrichtung eine Höhe von mindestens 5 mm, vorzugsweise von mindestens 10 mm aufweist.

4. Verfahren nach einem der vorhergehenden Ansprüche, wobei ein Wicklungsgrundkörper-Abschnitt, in dem die Wicklungsgrundkörper gegeneinander nicht aufgespreizt sind, in Axialrichtung einen Überstand von mindestens 5 mm, vorzugsweise von mindestens 10 mm, gegenüber einem Stator-Rohling des Stators oder Blechpaket des Stators aufweist.

5. Verfahren nach einem der vorhergehenden Ansprüche, wobei die Wicklungsgrundkörper in Axialrichtung einen Überstand von mindestens 10 mm, vorzugsweise von mindestens 20 mm, zum Stator-Rohling des Stators oder Blechpaket des Stators aufweisen.

6. Verfahren nach einem der vorhergehenden Ansprüche, wobei mindestens einer der Wicklungsgrundköper (13) U-förmig ist und/oder wobei mindestens einer der Wicklungsgrundköper (13) I-förmig ist.

7. Verfahren nach einem der vorhergehenden Ansprüche, wobei nur ein Wickelkopf (11, 12) oder beide Wickelköpfe zumindest abschnittsweise durch additives Aufbringen, insbesondere durch schichtweises Aufbringen eines Aufbaumaterials und örtlich selektives Verfestigen des Aufbaumaterials durch eine Bestrahlung mit mindestens einem auf das Aufbaumaterial auftreffenden Strahl, hergestellt wird/werden.

8. Verfahren nach einem der vorhergehenden Ansprüche, wobei die Wicklungsgrundkörper (13) durch Ziehen und/oder durch Umformen, z. B. Biegen, von, ggf. gezogenen, Rohlingen und/oder ein additives Herstellungsverfahren erzeugt werden.

9. Verfahren nach einem der vorhergehenden Ansprüche, wobei Enden der Wicklungsgrundkörper (13) vor dem additiven Aufbringen nivelliert werden, insbesondere durch Fräsen, und/oder, insbesondere sich an das Nivellieren anschließend, gereinigt werden.

10. Verfahren nach einem der vorhergehenden Ansprüche, wobei eine Position und/oder Ausdehnung bzw. Form von Enden der Wicklungsgrundkörper, ggf.
vor dem additiven Aufbringen, durch eine, z. B. optische, Messeinrichtung, bestimmt wird.

11. Verfahren nach einem der vorhergehenden Ansprüche, wobei das Einbringen, insbesondere Einstecken, von Wicklungsgrundkörpern (13) in Statornuten eines Stator-Rohlings (10) erfolgt, wobei der Stator-Rohling (10) insbesondere ein Blechpaket und/oder Wicklungsträger ist oder umfasst.

12. Verfahren nach einem der vorhergehenden Ansprüche, wobei die Statornuten zu zumindest einem Wickelkopf (11, 12) und/oder zu einer Innenseite eines Stators oder Stator-Rohlings (10) hingeschlossen sind.

13. Verfahren nach einem der vorhergehenden Ansprüche, wobei ein direktes additives Aufbringen von Verbindungselementen des Wickelkopfes (11, 12) auf die Enden der Wicklungsgrundkörper (13) erfolgt.

14. Verfahren nach einem der vorhergehenden Ansprüche, wobei die Wicklungsgrundkörper (13) unterschiedliche Leitertypen umfassen, wobei insbesondere ein erster Wicklungsgrundkörper aus einem ersten Leitertyp und ein zweiter Wicklungsgrundkörper aus einem zweiten, sich vom ersten Leitertyp unterscheidenden Leitertyp ausgebildet ist.

15. Stator, umfassend eine Wicklung, vorzugsweise eine Hairpin-Wicklung, für eine elektrische Maschine, insbesondere einen Elektromotor oder Generator, hergestellt nach dem Verfahren nach einem der vorhergehenden Ansprüche,
wobei Wicklungsgrundkörper (13) in Statornuten eingebracht, insbesondere eingesteckt, sind,
wobei zumindest ein Abschnitt zumindest eines Wickelkopfes (11, 12) additiv aufgebracht ist, insbesondere durch schichtweises Aufbringen eines Aufbaumaterials und örtlich selektives Verfestigen des Aufbaumaterials durch eine Bestrahlung mit mindestens einem auf das Aufbaumaterial auftreffenden Strahl,
**dadurch gekennzeichnet, dass** die Wicklungsgrundkörper (13) an Ihren Enden, insbesondere unmittelbar angrenzend an einen Slotliner, gegeneinander aufgespreizt sind.

## Claims

1. Method for producing a stator, comprising a winding, preferably a hairpin winding, for an electrical machine, in particular an electric motor or generator, comprising the following steps:
- introducing, in particular inserting, winding base bodies (13) into stator grooves and
- additively applying at least one section of at least one winding head (11, 12), in particular by layer-by-layer application of a construction material and local selective solidification of the construction material by irradiation using at least one beam incident on the construction material, **characterized in that**
- the winding base bodies (13) are spread apart in relation to one another at their ends, in particular directly adjoining a slot liner, or, in particular before the additive application, are spread apart in relation to one another at their ends, in particular directly adjoining a slot liner.

2. Method as claimed in claim 1, wherein the winding base bodies spread apart in relation to one another have a distance of at least 0.5 mm, preferably at least 1.0 mm in relation to one another at their ends.

3. Method as claimed in any one of the preceding claims, wherein a winding base body section, in which the winding base bodies are spread apart in relation to one another, has a height of at least 5 mm, preferably at least 10 mm in the axial direction.

4. Method as claimed in any one of the preceding claims, wherein a winding base body section, in which the winding base bodies are not spread apart in relation to one another, has a protrusion of at least 5 mm, preferably at least 10 mm, in the axial direction in relation to a stator blank of the stator or laminated core of the stator.

5. Method as claimed in any one of the preceding claims, wherein the winding base bodies have a protrusion of at least 10 mm, preferably at least 20 mm, in the axial direction in relation to the stator blank of the stator or the laminated core of the stator.

6. Method as claimed in any one of the preceding claims, wherein at least one of the winding base bodies (13) is U-shaped and/or wherein at least one of the winding base bodies (13) is I-shaped.

7. Method as claimed in any one of the preceding claims, wherein only one winding head (11, 12) or both winding heads is/are produced at least in some sections by additive application, in particular by layer-by-layer application of a construction material and local selective solidification of the construction material by irradiation using at least one beam incident on the construction material.

8. Method as claimed in any one of the preceding claims, wherein the winding base bodies (13) are produced by drawing and/or by shaping, for example, bending, of, possibly drawn, blanks and/or an additive production method.

9. Method as claimed in any one of the preceding claims, wherein ends of the winding base bodies (13) are leveled before the additive application, in particular by milling, and/or are cleaned, in particular following the leveling.

10. Method as claimed in any one of the preceding claims, wherein a position and/or extension or shape of ends of the winding base bodies is determined by a for example, optical, measuring device, possibly before the additive application.

11. Method as claimed in any one of the preceding claims, wherein winding base bodies (13) are introduced, in particular inserted, into stator grooves of a stator blank (10), wherein the stator blank (10) in particular is or comprises a laminated core and/or winding carrier.

12. Method as claimed in any one of the preceding claims, wherein the stator grooves are closed toward at least one winding head (11, 12) and/or toward an inside of a stator or stator blank (10).

13. Method as claimed in any one of the preceding claims, wherein connecting elements of the winding head (11, 12) are directly additively applied to the ends of the winding base bodies (13).

14. Method as claimed in any one of the preceding claims, wherein the winding base bodies (13) comprise different conductor types, wherein in particular a first winding base body is formed from a first conductor type and a second winding base body is formed from a second conductor type different from the first conductor type.

15. Stator, comprising a winding, preferably a hairpin winding, for an electrical machine, in particular an electric motor or generator, produced according to the method as claimed in any one of the preceding claims,
wherein winding base bodies (13) are introduced, in particular inserted, into stator grooves,
wherein at least one section of at least one winding head (11, 12) is additively applied, in particular by layer-by-layer application of the construction material and local selective solidification of the construction material by irradiation using at least one beam incident on the construction material,
**characterized in that** the winding base bodies (13) are spread apart in relation to one another at their ends, in particular directly adjoining a slot liner.

## Revendications

1. Procédé pour la fabrication d'un stator comprenant un enroulement, de préférence un enroulement en épingle à cheveux, pour une machine électrique, en particulier un moteur électrique ou un générateur, comprenant les étapes suivantes :
- insertion, en particulier enfichage, de corps de base d'enroulement (13) dans des encoches de stator et
- application par ajout de matière d'au moins une partie d'au moins une tête d'enroulement (11, 12), en particulier par application couche par couche d'un matériau de construction et solidification locale sélective du matériau de construction par exposition à au moins un rayon touchant le matériau de construction,
**caractérisé en ce que**
- les corps de base d'enroulement (13) sont écartés les uns des autres à leurs extrémités, en particulier juste à la limite d'un caniveau d'encoche, ou en particulier écartés les uns des autres à leurs extrémités, en particulier juste à la limite d'un caniveau d'encoche, avant l'application par ajout de matière.

2. Procédé selon la revendication 1, dans lequel les corps de base d'enroulement écartés les uns des autres sont écartés les uns des autres à leurs extrémités d'au moins 0,5 mm, de préférence d'au moins 1,0 mm.

3. Procédé selon l'une des revendications précédentes, dans lequel une partie de corps de base d'enroulement dans laquelle les corps de base d'enroulement sont écartés les uns des autres présente dans le sens axial une hauteur d'au moins 5 mm, de préférence d'au moins 10 mm.

4. Procédé selon l'une des revendications précédentes, dans lequel une partie de corps de base d'enroulement dans laquelle les corps de base d'enroulement ne sont pas écartés les uns des autres présente dans le sens axial un dépassement d'au moins 5 mm, de préférence d'au moins 10 mm, par rapport à une ébauche de stator du stator ou à un paquet de tôles du stator.

5. Procédé selon l'une des revendications précédentes, dans lequel les corps de base d'enroulement présentent dans le sens axial un dépassement d'au moins 10 mm, de préférence d'au moins 20 mm, par rapport à une ébauche de stator du stator ou à un paquet de tôles du stator.

6. Procédé selon l'une des revendications précédentes, dans lequel au moins un des corps de base d'enroulement (13) est en forme de U et/ou dans lequel au moins un des corps de base d'enroulement (13) est en forme de I.

7. Procédé selon l'une des revendications précédentes, dans lequel une seule tête d'enroulement (11, 12) ou les deux têtes d'enroulement est/sont fabriquée/s au moins en partie par application par ajout de matière, en particulier par application couche par couche d'un matériau de construction et solidification locale sélective du matériau de construction par exposition à au moins un rayon atteignant le matériau de construction.

8. Procédé selon l'une des revendications précédentes, dans lequel les corps de base d'enroulement (13) sont produits par étirage et/ou par déformation, p. ex. pliage, d'ébauches, éventuellement embouties, et/ou par un procédé de fabrication par ajout de matière.

9. Procédé selon l'une des revendications précédentes, dans lequel des extrémités des corps de base d'enroulement (13) sont nivelées avant l'application par ajout de matière, en particulier par fraisage, et/ou en particulier nettoyées après le nivèlement.

10. Procédé selon l'une des revendications précédentes, dans lequel une position et/ou une extension ou une forme d'extrémités des corps de base d'enroulement sont déterminées avant l'application par ajout de matière par une installation de mesure, par exemple optique.

11. Procédé selon l'une des revendications précédentes, dans lequel l'insertion, en particulier l'enfichage, de corps de base d'enroulement (13) est effectuée dans des encoches de stator d'une ébauche de stator (10), l'ébauche de stator (10) étant ou comprenant en particulier un paquet de tôles et/ou un support d'enroulement.

12. Procédé selon l'une des revendications précédentes, dans lequel les encoches de stator sont fermées vers au moins une tête d'enroulement (11, 12) et/ou vers une face intérieure d'un stator ou d'une ébauche de stator (10).

13. Procédé selon l'une des revendications précédentes, dans lequel des éléments de liaison de la tête d'enroulement (11, 12) sont appliqués directement sur les extrémités des corps de base d'enroulement (13) par ajout de matière.

14. Procédé selon l'une des revendications précédentes, dans lequel les corps de base d'enroulement (13) comprennent différents types de conducteurs, en particulier dans lequel un premier corps de base d'enroulement est formé d'un premier type de conducteur et un deuxième corps de base d'enroulement est composé d'un deuxième type de conducteur différent du premier type de conducteur.

15. Stator comprenant un enroulement, de préférence un enroulement en épingles à cheveux, pour une machine électrique, en particulier un moteur électrique ou un générateur, fabriqué suivant le procédé selon l'une des revendications précédentes,
dans lequel des corps de base d'enroulement (13) sont insérés, de préférence enfichés, dans des encoches de stator,
dans lequel au moins une partie d'au moins une tête d'enroulement (11, 12) est fabriquée par application par ajout de matière, en particulier par application couche par couche d'un matériau de construction et solidification locale sélective du matériau de construction par exposition à au moins un rayon atteignant le matériau de construction,
**caractérisé en ce que** les corps de base d'enroulement (13) sont écartés les uns des autres à leurs extrémités, en particulier juste à la limite d'un caniveau d'encoche.
